**Europäisches Patentamt**

**European Patent Office**

**Office européen des brevets**

(11) Veröffentlichungsnummer: **0 237 879 B1**

(12) **EUROPÄISCHE PATENTSCHRIFT**

(45) Veröffentlichungstag der Patentschrift:
**17.07.91 Patentblatt 91/29**

(51) Int. Cl.$^5$: **G01N 27/28**

(21) Anmeldenummer: **87103142.3**

(22) Anmeldetag: **05.03.87**

(54) **Klemmring zur Spannung und Fixierung einer Membran über der Messfläche eines Messaufnehmers.**

(30) Priorität: **18.03.86 DE 3609080**

(43) Veröffentlichungstag der Anmeldung:
**23.09.87 Patentblatt 87/39**

(45) Bekanntmachung des Hinweises auf die Patenterteilung:
**17.07.91 Patentblatt 91/29**

(84) Benannte Vertragsstaaten:
**CH DE FR GB LI**

(56) Entgegenhaltungen:
**EP-A- 0 150 864**
**DE-A- 3 040 544**
**GB-A- 2 095 409**

(73) Patentinhaber: **PPG Hellige GmbH**
**Heinrich-von-Stephan-Str. 4**
**W-7800 Freiburg (DE)**

(72) Erfinder: **Ahsbahs, Walter**
**Altestrasse 1**
**W-7802 Merzhausen (DE)**
Erfinder: **Pomorin, Karl-Heinz**
**Ringstrasse 8**
**W-7801 Stegen (DE)**
Erfinder: **Leist, Helmut**
**Tannenweg 45a**
**W-7808 Waldkirch (DE)**
Erfinder: **Ullrich, Georg**
**Mettackerweg 84**
**W-7800 Freiburg i.Br. (DE)**

(74) Vertreter: **TER MEER - MÜLLER - STEINMEISTER & PARTNER**
**Mauerkircherstrasse 45**
**W-8000 München 80 (DE)**

EP 0 237 879 B1

## Beschreibung

Die Erfindung betrifft einen Klemmring zur Spannung und Fixierung einer die Meßfläche eines Meßaufnehmers zur Bestimmung des Partialdrucks eines Gases überspannenden und in den Klemmring eingelegten Membran an einem umlaufenden Paßflächenrand des Meßaufnehmers. Unter "Meßaufnehmer" wird dabei ein elektrochemischer Meßaufnehmer mit einer durch eine Membran vom zu messenden Medium getrennten Elektrolytschicht verstanden, wie er z.B. für transkutane Blutgasmessung benutzt wird.

Die Membran eines Meßaufnehmers der genannten Art muß die Meßfläche unter möglichst gleichmäßiger Spannung vollständig überdecken ; sie muß außerdem entlang des umlaufenden Paßflächenrands vollständig abdichtend eingespannt sein. Die DE-PS 30 40 544 beschreibt einen in Serienfertigung vorgefertigten und als Austauschteil gedachten Klemmring oder Spannring zur Spannung und Fixierung der Meßflächenmembran am umlaufenden Paßflächenrand des Meßaufnehmers, bei dem die Membran am Klemmring durch einen den Membranrand lose einspannenden Haltering fixiert ist, der innerhalb eines umlaufenden Halterands in eine ringförmige Vertiefung des Klemmrings eingelegt ist. Mit einem derartigen Klemmring läßt sich problemlos auch durch wenig geschultes Personal ein rascher Wechsel der Membran eines Meßaufnehmers erreichen. Solche Klemmringe haben sich daher in der Praxis durchgesetzt und sehr bewährt.

Beim Betrieb von elektrochemischen Aufnehmern, z.B. vom CLARK-Typ für polarographische Sauerstoffmessung oder vom STOW-GERTZ-SEVERINGHAUS-Typ für ionensensitive Kohlendioxidmessung, ist zwischen der Meßfläche und der Membran eine sehr dünne Schicht eines hygroskopischen Elektrolyte erforderlich. Bei die Meßfläche abschließender Membran kann Wasserdampf durch die Membran in die Elektrolytschicht eindiffundieren und die Schichtdicke erhöhen. Hierdurch können unerwünschte Effekte auftreten, insbesondere eine Erhöhung des Diffusionswiderstands für das Meßgas als auch für den Leitwert des Elektrolyten zwischen den Elektroden. Es kann dadurch die Empfindlichkeit des Meßaufnehmners verändert und die Ansprechzeit auf Gasänderungen erhöht werden.

Um die Schichtdickenänderung des Elektrolyten zu vermeiden, könnte daran gedacht werden, Ausgleichskapillaren oder -kanäle am Aufnehmer vorzusehen, die beispielsweise in den umlaufenden Paßflächenrand einzuarbeiten wären. Dies verteuert jedoch einerseits die Herstellung. Andererseits sind relativ starke Kapillaren nötig, um bei Abnutzung durch mehrfaches Bespannen und trotz unvermeidlicher Ablagerungen, z.B. von Elektrolytrückständen, die Funktion zu erhalten. Mindestens bei neuen Meßaufnehmern würde dies aber wiederum ein vorzeitiges "Abwandern" des Elektrolyten fördern.

Der Erfindung liegt die Aufgabe zugrunde, eine unerwünschte Schichtdickenveränderung des hygroskopischen Elektrolyten zwischen der Membran und der Meßfläche eines Meßaufnehmers zur Bestimmung des Partialdrucks eines Gases zuverlässig zu vermeiden.

Die im Patentanspruch 1 angegebene Lehre beruht auf dem Gedanken, zwischen der Membran und dem umlaufenden paßflächenrand, an dem die Membran mittels des Klemm-rings gespannt gehalten wird, an wenigstens einer Stelle einen schmalen, in radialer Richtung nach außen führenden Folienstreifen einzulegen, so daß sich eine Kapillarverbindung vom elektrolytgefüllten Inneraum der von der Membran umschlossenen Meßfläche und der Umgebung ergibt.

Überraschenderweise hat sich gezeigt, daß durch einen solchen zwischen dem Faßflächenrand und der Membran eingeklemmten schmalen radial verlaufenden Folienstreifen einerseits keine Beeinträchtigung der erforderlichen Abdichtung der die Meßfläche überspannenden Membran, andererseits aber im Bereich der Ränder des Folienstreifens eine für den gewünschten Ausgleichszweck ausreichende Kapillarverbindung zur Umgebung auf einfache Weise erreichen läßt.

Vorteilhafte Weiterbildungen des Erfindungsgedankens sind in abhängigen Patentansprüchen gekennzeichnet.

Wird zur Spannung und Fixierung der Membran über der Meßfläche des Meßaufnehmers ein Klemmring mit einem den Membranrand einspannenden Haltering gemäß der bereits erwähnten DE-PS 30 40 544 verwendet, so läßt sich eine besonders vorteilhafte Lösung dadurch erreichen, daß der Folienstreifen als radial nach innen vorspringende Lasche ausgebildet ist, die einstückig mit dem Haltering verbunden ist und aus dem gleichen dünnen Folienmaterial wie der Haltering besteht. Durch diese einstückige Ausbildung von Haltering und die erwünschte Kapillarverbindung herstellenden Lasche wird vor allem eine stets richtige Positionierung des Folienstreifens und damit der Kapillarverbindung gewährleistet.

Die Erfindung und vorteilhafte Einzelheiten werden nachfolgend unter Bezug auf die Zeichnung in beispielsweiser Ausführungsform näher erläutert. Es zeigt

Fig. 1　　einen Schnitt durch den Gehäusegrundkörper eines Meßaufnehmers zur transktanen Bestimmung des Partialdrucks von Gasen im Blut oder Körpergewebe mit durch einen Klemmring gemäß DE-PS 30 40 544 zentrierter und gespannter Membran,

2

Fig. 2     einen Schnitt durch den als Auswechselteil gefertigten Klemmring mit Membran, die durch einen mit der erfindungsgemäßen Lasche versehenen Haltering am Klemmring fixiert wird und

Fig. 3     den Haltering für die Membran mit der die erwünschte Kapillarverbindung herstellenden Lasche.

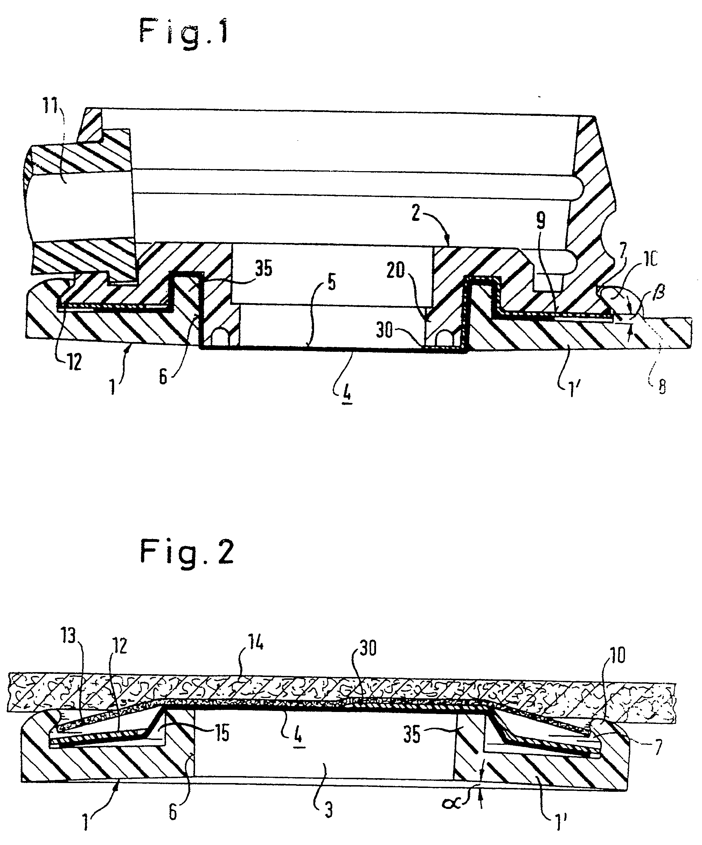

Die Fig. 1 zeigt einen Gehäusegrundkörper 2 eines Meßaufnehmers vom Clark-Typ mit seitlicher Signalabführung über einen nicht näher dargestellten Kabelkanal 11. Der Aufbau des Meßfühlers entspricht herkömmlicher Technik und bedarf hier keiner Erläuterung. Die durch eine nach unten vorspringende umlaufende Wandung 20 des Gehäusegrundkörpers 2 umgrenzte Meßfläche 5 des Meßaufnehmers ist mit einer aus einer dünnen Folie, beispielsweise aus Polytetrafluorethylen, aus Polypropylen oder Polyethylen bestehenden kreisrunden Membran 4 überspannt, welche in der zeichnerischen Darstellung wesentlich dicker erscheint als es der tatsächlichen Ausführung entspricht. Die Zeichnung zeigt den Meßaufnehmer in etwa 10-fach vergrößerter Darstellung. Die die Meßfläche 5 überspannende Membran 4 wird durch einen Klemmring 1 hauptsächlich an einem umlaufenden Paßflächenrand 6 gespannt gehalten. Der Klemmring 1 selbst ist durch einen an seinem Außenrand geringfügig nach innen gebogenen Halterand 10 fixiert, der in eine umlaufende Nut 7 am unteren Außenrand des Grundkörpers 1 eingreift und den Klemmring 1 fixiert. Am Außenrand des Klemmrings 1 ist eine Grifflasche oder -zunge 8 angesetzt, an der sich der Klemmring 1 bei einem erforderlichen Membranwechsel leicht abziehen läßt. Wird für den Membranwechsel eine (bekannte) Wechselvorrichtung verwendet, so kann die Grifflasche 8 auch entfallen.

Die Fig. 2 zeigt den als Austauschteil gefertigten Klemmring 1, dessen freier innerer Ringraum 3 oberseitig durch die Membran 4 überspannt ist. Die Membran 4 wird am Klemmring 1 durch einen Haltering 12 lose fixiert, der aus einem chemisch neutralen, relativ formstabilen Kunststoffolienmaterial hergestellt ist und der von der Oberseite in eine ringförmige Vertiefung 15 zwischen dem nach innen gebogenen Halterand 10 und einer Klemmwand 35 des Halterings 12 eingelegt ist. Der Haltering 12 bedeckt den umlaufenden außenrand der Membran 4 ; sein Außendurchmesser ist so bemessen, daß er unter geringem Druck hinter dem Halterand 10 auf der Innenseite einrastet und die Membran 4 lose fixiert gespannt hält.

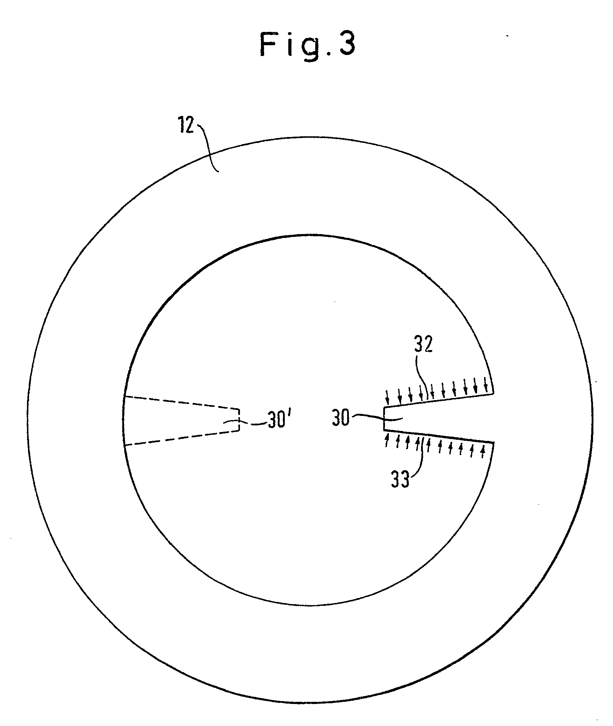

Gemäß der Erfindung ist der Haltering 12 mit wenigstens einer radial nach innen vorspringenden, einstückig mit dem Material des Halterings 12 ausgebildeten zungenartigen Lasche 30 versehen (vgl. insbesondere Fig. 3). Es können auch mehrere derartige zungenartige Laschen vorgesehen sein ; in Fig. 3 ist eine weitere Lasche 30' durch gestrichelte Linien angedeutet. Wie die Fig. 2 erkennen, läßt, erstreckt sich die zungenartige Lasche 30 zunächst, d.h. bei noch nicht auf den Meßaufnehmer 1 aufgezogenem Klemmring zwischen der Membran 4 und einer die Membran oberseitig abdeckenden Schutzfolie 13, welche als rundes Scheibchen aus steifem Papier mit einem Außendurchmesser gefertigt ist, der ebenfalls geringfügig größer ist als der Durchmesser des Klemmrings an der oberen umlaufenden Innenkante des Halterands 10. Die Schutzfolie 13 rastet also ebenfalls unter dem Halterand 10 ein, so daß die hauchdünne Folie der Membran 4 oberseitung geschützt ist.

Wie die Fig. 1 erkennen läßt, liegt die zungenartige Lasche 30 bei auf den Meßaufnehmer aufgedrücktem Klemmring 1 zwischen der jetzt gespannten Membran 4 und dem Paßflächenrand 6. Die Länge der zungenartigen Läsche 30 ist so bemessen, daß sie sich bei mit der Membran 4 bespanntem Meßaufnehmer vom Außenrand der Meßfläche 5 über die gesamte, leicht konisch gestaltete Paßfläche 6 bis zur Unterfläche 9 am Grundkörper 2, also bis in den Bereich des Zwischenspalts zwischen der Unterfläche 9 des Grundkörpers 2 und dem äußeren Ringflansch 1' des Klemmrings 1 erstreckt. In diesem durch den Bezugshinweis β angedeuteten Zwischenspalt verbleibt der Haltering 12 im bespannten Zustand des Meßaufnehmers.

Die erfindungsgemäß vorgesehene zungenartige Lasche 30 hat folgende Wirkung :

Wie oben erwähnt, kann sich die Schichtdicke des hygroskopischen Elektrolyten zwischen der Meßfläche 5 und der Membran 4 aufgrund von eindiffundierendem Wasser ändern. Die daraus resultierenden Nachteile für die Funktionsfähigkeit des Meßaufnehmers sind oben erläutert. Die erfindungsgemäße zungenartige Lasche 30 hat nun die Wirkung, daß sich zwischen der Membran 4 und dem umlaufenden Paßflächenrand 6 kapillarähnliche Kanäle 32, 33 bilden, die in Fig. 3 durch kleine Pfeile angedeutet sind. Diese Kapillarkanäle 32, 33 entstehen dadurch, daß im Bereich der laschenartigen Zunge 30 die Membran 4 jedenfalls bei geringfügig ansteigendem Innendruck nicht mehr vollständig abdichtend gegen den Paßflächenrand 6 anliegt.

Der Querschnitt der Kapillarkanäle 32, 33 ist außerordentlich fein und kann im übrigen bestiemmt werden einmal durch die Breite und den Schnitt der zungenartigen Lasche 30 ; vor allem aber durch geeignete Auswahl der Materialdicke für den Haltering 12. Dieser Haltering 12 wird aus einem chemisch neutralen dünnen Folienmaterial, beispielsweise aus Polyesterfolienmaterial mit einer Schichtdicke von 5 bis 500 μm hergestellt. Bei einer erprobten Ausführungsform der Erfindung wurde für den Haltering 12 eine Materialschichtdicke von 50 μm gewählt. Um das Meßergebnis nicht zu beeinträchtigen, sollte die Spitze der zungenartigen Lasche 30 gerade bis zum äußeren Rand der Meßfläche 5 reichen, also keinen nennenswerten Teil der Meßfläche bedekken.

3

Wie bereits bekannt (vgl. DE-PS 30 40 544), dient ein selbstklebendes Schutz- und Halteband 14 zur besseren Handhabung und Aufbewahrung mehrerer, mit Membran versehener Halteringe. Zum Wechseln einer Membran 4 am Meßaufnehmer wird wie folgt vorgegangen :

Der Klemmring 1 mit durch den Haltering 12 fixierter und bereits zentrierter Membran 4 wird vom Schutz- und Halteband 14 abgenommen, wobei die Schutzfolie 13 am Band 14 haften bleibt. Sodann wird der Klemmring mit der bereits zentrierten Membran 4 über den Paßflächenrand 6 aufgezogen, wobei sich die Membran 4 straff über die Meßfläche 5 spannt und am Paßflächenrand 6 eingespannt wird. Dabei liegt jetzt die zwngenartige Lasche 30, wie aus Fig. 1 ersichtlich, zwischen dem Einspannbereich der Membran 4 und dem Paßflächenrand 6. Der Klemmring 1 wird im Bereich seines flanschartigen Außenrands 1' gegen die Unterfläche 9 des Meßaufnehmergehäuses 2 gedrückt, so daß der umgestülpte Halterand 10 in die umlaufende Nut 7 einrastet. Eine zusätzliche Spann- und Klemmwirkung ergibt sich dadurch, daß der flanschartige Außenrand 1' des Klemmrings 1 im nicht aufgespannten Zustand von innen nach außen geringfügig geneigt ist (Winkel α ; vgl. Fig. 2), wodurch sich, wenn der Halterand 10 in die umlaufende Nut 7 eingreift, eine Andruckspannung an der Unterfläche des Grungkörpers 2 ergibt.

Mit der Erfindung wurde ein einfaches, zuverlässiges Mittel geschaffen, um Meßwertverfälschungen bei elektrochemischen Aufnehmern, die mit hygroskopischen Elektrolyten arbeiten, aufgrund von eindiffundierendem Wasser und damit einhergehender Schichtdickenänderung des Elektrolyten zu vermeiden. Bei der bevorzugten Ausführungsform der Erfindung wird dies duch eine relativ geringfügige Abwandlung des Halterings 12 erreicht, dessen vorteilhafte Funktion bereits in der DE-PS 30 40 544 beschrieben ist. Wird jedoch eine andere Art der Spannung und Fixierung der Membran über der Meßfläche des Meßaufnehmers vorgesehen, so kann, ohne vom Grundgedanken der Erfindung abzuweichen, die erwünschte Kapillarwirkung auch dadurch erreicht werden, daß zwischen der Membran und der Paßfläche am Grundkörper des Meßaufnehmers ein schmaler Folienstreifen eingelegt wird. Dies kann beispielsweise so erfolgen, daß ein schmaler Folienstreifen entweder auf die Paßfläche am Meßaufnehmer oder auf die Innenseite der Membranfolie aufgelegt wird, wobei die Haftung in der Regel bereits durch Adhäsion gewährleistet ist. Da es sich jedoch bei diesen Folienstreifen um winzig kleine Stückchen eines durchsichtigen, sehr dünnen Folienmaterials handelt, ergeben sich beim Einlegen einer solchen Lasche praktische Handhabungsschwierigkeiten. Bei dem beschriebenen Ausführungsbeispiel der Erfindung dagegen sind solche Schwierigkeiten vollständig vermieden, da die zungenartige Lasche 30 einstückig mit dem Haltering 12 ausgebildet ist und automatisch positionsrichtig eingelegt wird, sobald die Membran durch Aufdrücken des Kemmrings 1 auf den Meßaufnehmer über die Mefläche 5 gespannt wird.

## Patentansprüche

1. Klemmring zur Spannung und Fixierung einer die Meßfläche (5) eines Meßaufnehmers zur Bestimmung des Partialdrucks eines Gases überspannenden und in den Klemmring (1) eingelegten Membran (4) an einem umlaufenden Paßflächenrand (6) des Meßaufnehmers, der mit einem elektrolytgefüllten Innenraum zwischen Meßfläche (5) und Membran (4) versehen ist, **gekennzeichnet durch** wenigstens einen im Bereich des Paßflächenrands (16) auf der dem Meßaufnehmer zugekehrten Innenfläche der Membran (4) aufliegenden radial verlaufenden Folienstreifen (30), der einen schmalen Sektor des Paßflächenrands (6) überdeckt, zur Bildung einer Kapillarvebindung vom elektrolytgefüllten Inneraum und der Umgebung.

2. Klemmring nach Anspruch 1, der mit einem umlaufenden Halterand (10) versehen ist, der auf eine ringförmige Rastnut (7) an der äußeren Mantelfläche des Grundkörpers (2) des zur transkutanen Bestimmung von Gasen im Blut oder Körpergewebe bestimmten Meßaufnehmers angepaßt ist und bei dem die Membran (4) durch einen den Membranrand einspannenden Haltering (12) lösbar fixiert ist, der innerhalb des umlaufenden Halterands (10) in eine ringförmige Vertiefung des Klemmrings (1) eingelegt ist, und wobei der wenigstens eine Folienstreifen (30) als radial nach innen vorspringende Lasche einstückig mit dem Haltering (12) ausgebildet ist.

3. Klemmring nach Anspruch 2, **dadurch gekennzeichnet,** daß die Länge der Lasche (30) so bemessen ist, daß sich bei Bespannung des Meßaufnehmers mit der Membran (4) die Vorderkante der Lasche (30) gerade bis zur Außenkante des Innenraums zwischen der Meßfläche (5) und der Membran (4) erstreckt.

4. Klemmring nach Anspruch 2 oder 3, **dadurch gekennzeichnet,** daß der Haltering (12) mit Lasche (30) aus einem chemisch neutralen Folienmaterial mit einer Dicke von 5 bis 500 μm, vorzugsweies von 25 bis 100 μm, hergestellt ist.

## Claims

1. Clamping ring for stretching and fixing a diaphragm (4) on an encircling mating-surface rim (6) of a measuring sensor, which is provided with an electrolyte filled inner space between the measuring surface (5) and the diaphragm (4), which diaphragm stretches over the measuring surface (5) of the measuring sensor for determining the partial pressure of a gas and is inserted into the clamping ring (I), characterised by at least one radially running foil strip (30) which, in the area of the mating-surface rim (6) sits on the inner surface of the diaphragm (4), which inner surface faces toward the measuring sensor, and this foil strip covers a narrow sector of the mating-surface rim (6) for forming a capillary connection from the electrolyte-filled inner space and the environment.

2. Clamping ring according to Claim 1, which is provided with an encircling retaining rim (10) which is adapted to an annular catch groove (7) at the outer circumference of the base body (2) of the measuring sensor intended for the transcutaneous determination of gases in the blood or body tissue, and in which the diaphragm (4) is detachably fixed by a retaining ring (12) which clamps the diaphragm rim and which is inserted inside the encircling retaining rim (10) into an annular recess of the clamping ring (1), and with the at least one foil strip (30) being made as a radially inwardly projecting tab in one piece with the retaining ring (12).

3. Clamping ring according to Claim 2, characterised in that the length of the tab (30) is of such a size that, when the measuring sensor is covered with the diaphragm (4), the front edge of the tab (30) just extends up to the outer edge of the inner space between the measuring surface (5) and the diaphragm (4).

4. Clamping ring according to Claim 2 or 3, characterised in that the retaining ring (12) with the tab (30) is made of a chemically neutral foil material with a thickness of 5 to 500 μm, preferably of 25 to 100 μm.

## Revendications

1. Anneau de serrage pour la tension et la fixation d'une membrane (4) recouvrant la surface de mesure (5) d'une tête de mesure pour la détermination de la pression partielle d'un gaz et insérée dans l'anneau de serrage (1), sur le bord (6) d'une surface de contact circulaire de la tête de mesure, qui est pourvue d'une chambre intérieure remplie d'électrolyte entre la surface de mesure (5) et la membrane (4), caractérisé par au moins une bande de feuille mince (30) s'étendant radialement, reposant sur la surface inférieure de la membrane (4) tournée vers la tête de mesure, qui recouvre un petit secteur du bord (6) de la surface de contact, en vue de la formation d'une liaison capillaire entre la chambre intérieure remplie d'électrolyte et l'environnement.

2. Anneau de serrage selon la revendication 1, qui est équipé d'un bord de retenue circulaire (10), qui est ajusté sur une rainure annulaire (7) sur la surface latérale extérieure du corps (2) de la tête de mesure en vue de la détermination transcutanée de gaz dans le sang ou des tissus corporels et dans lequel la membrane (4) est fixée de façon amovible par un anneau de retenue (12) enserrant le bord de la membrane, qui est introduit à l'intérieur du bord de retenue circulaire (10) dans une cavité annulaire de l'anneau de serrage (1), ladite au moins une bande en feuille mince (30) en tant que couvre-joint faisant saillie radialement vers l'intérieur étant réalisée d'une seule pièce avec l'anneau de retenue (12).

3. Anneau de serrage selon la revendication 2, caractérisé en ce que la longueur du couvre-joint (30) est dimensionnée de sorte que lors du recouvrement de la tête de mesure avec la membrane (4), le bord antérieur du couvre-joint (30) s'étend exactement jusqu'au bord extérieur de la chambre intérieure entre la surface de mesure (5) et la membrane (4).

4. Anneau de serrage selon la revendication 2 ou 3, caractérisé en ce que l'anneau de retenue (12) avec le couvre-joint (30) est réalisé en un matériau en feuille chimiquement inerte d'épaisseur de 5 à 500 μm, de préférence de 25 à 100 μm.

# Fig.1

# Fig.2

# Fig.3